# EUROPÄISCHE PATENTSCHRIFT

(11) **EP 1 425 951 B1**
(45) Veröffentlichungstag und Bekanntmachung des Hinweises auf die Patenterteilung: **07.06.2006**
(21) Anmeldenummer: 03027711.5
(22) Anmeldetag: 02.12.2003
(51) Int. Cl.: A01D 41/12, A01F 12/60, A01D 33/08

(54) **Erntemaschine mit Entladeförderer**
Harvester with unloading conveyor
Machine de récolte avec convoyeur de décharge

(30) Priorität: 04.12.2002 US 309975
(43) Veröffentlichungstag der Anmeldung: 09.06.2004
(73) Patentinhaber: DEERE & COMPANY, Moline, Illinois 61265-8098 (US)
(72) Erfinder: Pope, Glenn E., IL 61486 Viola (US); DePoorter, Marc C., IL 61244 East Moline (US); Dow, Chad A., IL 61244 East Moline (US)
(74) Vertreter: Holst, Sönke

(56) Entgegenhaltungen:
- US-A- 3 664 525
- US-A- 3 872 982
- US-A- 5 380 247
- US-B1- 6 285 198
- US-B1- 6 367 234

## Beschreibung

Die Erfindung betrifft eine Erntemaschine, insbesondere einen Mähdrescher, mit einem Vorratsbehälter für geerntetes Erntegut, der einen Trog bildende Wände umfasst, wobei ein Entladeförderer sich auf einem Element abstützt, das am Boden des Trogs angeordnet ist.

Landwirtschaftlich angebautes Erntegut kann als essbares Erntegut, nichtessbares Erntegut, genetisch modifizierte Organismen (GMO), nichtgenetisch modifizierte Organismen, organisch angebaut, pestizidfrei oder entsprechend anderer Eigenschaften klassifiziert werden. Nichtessbares Erntegut können beispielsweise Fasern liefernde Pflanzen, Baumwolle oder Gummi sein. Genetisch modifiziertes Erntegut kann Gemüse sein, das genetisch manipuliert wurde, um die mögliche Regalstandzeit gegenüber traditionell angebautem Gemüse zu verlängern. Organisch angebautes Erntegut wird von Pflanzen geerntet, die ohne Beaufschlagung mit bestimmten Pestiziden, Herbiziden oder anderen Chemikalien angebaut wurden.

Das Erntegut kann entsprechend spezifischer Eigenschaften oder Spezifikationen angebaut werden. Die Eigenschaften des Ernteguts können auf der genetischen Zusammensetzung des Ernteguts oder den Anbaupraktiken des Ernteguts beruhen, oder auf beiden. Es kann beispielsweise eine bestimmte Art von Mais angebaut werden, der aufgrund genetischer oder umgebungsbedingter Faktoren einen größeren Ölgehalt hat als andere Arten. In ähnlicher Weise kann eine bestimmte Art von Sojabohnen angebaut werden, die einen anderen Proteingehalt oder eine andere wünschenswerte Eigenschaft hat. Ein Verarbeiter, eine pharmazeutische Gesellschaft, ein Hersteller oder ein anderer Betroffener kann den Wunsch haben, landwirtschaftliche Produkte mit spezifischen Eigenschaften von einem Anbauer oder anderen Lieferanten zu erwerben. Der Anbauer oder Lieferant kann sich wünschen, für Erntegut mit spezifischen Eigenschaften einen höheren Preis zu verlangen als für ein handelsübliches Erntegut. Der Erwerber des landwirtschaftlichen Produkts kann eine hinreichende Bestätigung wünschen, dass das gekaufte landwirtschaftliche Produkt tatsächlich die gesuchten Eigenschaften aufweist.

Es besteht somit ein Bedarf daran, Erntegut mit spezifischen Eigenschaften während des Anbaus und der Verteilung und jeglicher daraus abgeleiteter Produkte genau zu identifizieren. Außerdem kann ein Erwerber eines landwirtschaftlichen Produkts oder Ernteguts die Möglichkeit wünschen oder verlangen, die Identität des Ernteguts mit spezifischen Eigenschaften nachzuverfolgen, um das Vorhandensein von Eigenschaften des Ernteguts oder die Abwesenheit unerwünschter Eigenschaften als Bedingung für eine kommerzielle Transaktion zu überprüfen. Es besteht demnach ein Bedarf, Erntegut während der Ernte zu trennen, damit keine Vermischung von Erntegut oder Erntegutresten mit verschiedenen Eigenschaften stattfindet.

Nach dem Entladen eines Vorratsbehälters eines Mähdreschers können Korn und Verunreinigungen in den unteren Bereichen des Vorratsbehälters und im Entladerohr verbleiben, die nicht ohne Schwierigkeiten mechanisch entfernt werden können.

Derzeit muss der Bediener zur gründlichen Reinigung des Vorratsbehälters manchmal in einen sehr kleinen Raum kriechen, der nicht vom Erdboden aus zugänglich ist und Korn und Verunreinigungen daraus heraus saugen oder fegen.

Das der Erfindung zu Grunde liegende Problem wird darin gesehen, die genannten Probleme zu überwinden.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt eine Reinigungsanordnung für einen Vorratsbehälter einer Erntemaschine vor. Der Vorratsbehälter, bei dem es sich um den Korntank eines Mähdreschers oder einen Vorratsbehälter einer Maschine zum Ernten von Kartoffeln oder Rüben handeln kann, hat einen Trog bildende Wände. Ein sich vertikal oder schräg nach oben erstreckender Entladeförderer, insbesondere ein Schnecken-, Paddel- oder Becherförderer, ist auf einem Element abgestützt, das sich am Boden des Trogs befindet. Es wird vorgeschlagen, dass wenigstens ein Wandbereich nahe des Elements eine Öffnung oder mehrere Öffnungen aufweist, die durch eine abnehmbare Abdeckung verschlossen ist bzw. sind.

Die Erfindung ermöglicht einen besseren Zugang zu den unteren Bereichen des Vorratsbehälters und eine verbesserte Entleerung des Vorratsbehälters zwecks gründlicher Reinigung. Der Wandbereich hat in der dargestellten Ausführungsform der Erfindung ein derartiges Tiefenprofil, dass Korn während der Reinigung leicht durch die Öffnungen fließt. Der Vorratsbehälter kann somit leicht und gründlich gereinigt werden, so dass die Zeit, die ein Bediener in den unteren Bereichen des Vorratsbehälters beim Aussaugen oder -fegen verbringt, verkürzt ist.

Die Öffnung im Wandbereich ist vorzugsweise in einem Gittermuster angeordnet.

Der Wandbereich und/oder das Element, auf dem sich der Entladeförderer abstützt, ist vorzugsweise gegossen.

Es wird vorgeschlagen, dass der Wandbereich mit dem Element, auf dem sich der Entladeförderer abstützt, einteilig ist. Das einteilige Element kann als Träger oder Stützelement fungieren, das das gesamte Gewicht des Entladeförderers und des Elements oder einen wesentlichen Teil davon abstützt. Insbesondere besteht die Möglichkeit, mit diesem einteiligen Element zusätzliche Elemente zum Abstützen des Entladeförderers einzusparen. Es kann somit das bisher bekannte Gusselement für den Entladeschneckenförderer und die vorderen und hinteren Metallabschnitte des Sumpfs durch ein einziges gegossenes Element ersetzen, was eine effizientere Montage und eine Verminderung der einzeln anzubringenden Teile mit sich bringt.

Bei einer Ausführungsform umfasst der Vorratsbehälter zwei Wandbereiche, die jeweils in der Nähe des Elements angeordnet sind bzw. daran anschließen und zum Reinigen die Öffnungen aufweist. Jeder der Wandbereiche bildet einen Bereich eines Sumpfs, der an den Wänden des Trogs angebracht ist. Die Wandbereiche können an ihren äußeren Enden am Trog befestigt sein.

In den Zeichnungen ist ein nachfolgend näher beschriebenes Ausführungsbeispiel der Erfindung dargestellt. Es zeigt:
- Fig. 1: eine schematische Seitenansicht einer Erntemaschine, in der die vorliegende Erfindung verwirklicht ist,
- Fig. 2: eine schematische Draufsicht auf die Erntemaschine aus Figur 1,
- Fig. 3: eine vergrößerte, perspektivische Teilansicht des Vorratsbehälters der Erntemaschine aus Figur 1,
- Fig. 4: eine von unten betrachtete vergrößerte, perspektivische Teilansicht des in Figur 3 gezeigten Vorratsbehälters,
- Fig. 5: eine vergrößerte, teilgeschnittene Seitenansicht eines Sumpfbereichs des Vorratsbehälters, bei der Seitenwände entfernt wurden, um innere Bauteile sichtbar zu machen,
- Fig. 6: eine perspektivische Ansicht des in den Figuren 4 und 5 gezeigten gegossenen Elements des Sumpfs,
- Fig. 7: eine Ansicht des gegossenen Elements des Sumpfs aus Figur 6 von unten, und
- Fig. 8: eine Seitenansicht des gegossenen Elements des Sumpfs aus Figur 6.

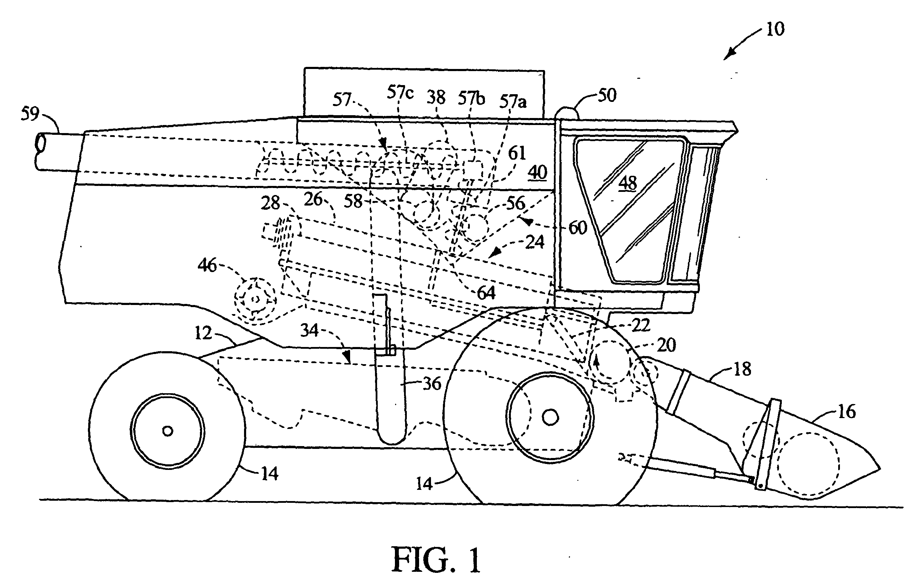

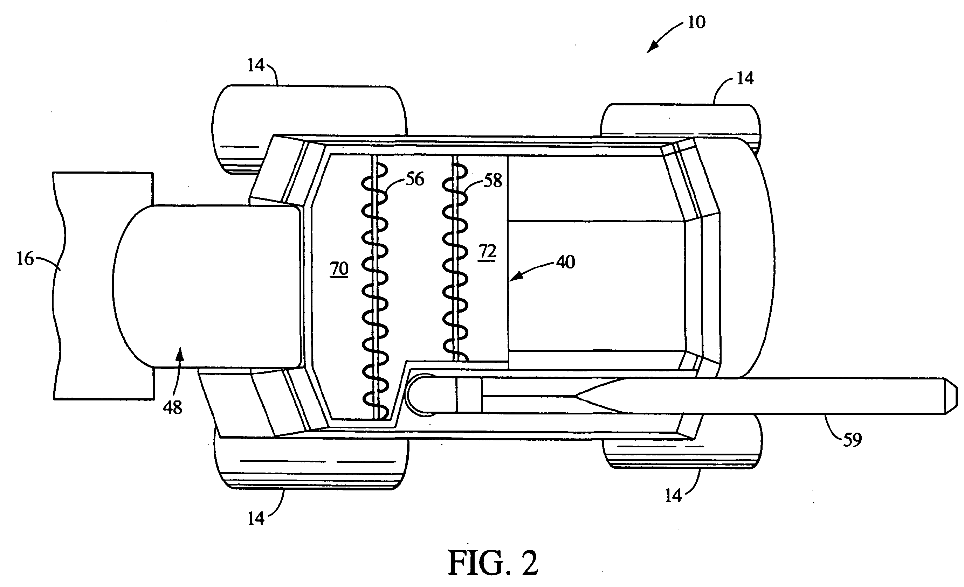

Die Figuren 1 und 2 zeigen einen landwirtschaftlichen Mähdrescher 10, der eine tragende Struktur 12 mit im Eingriff mit dem Erdboden befindlichen Mitteln 14 aufweist, die sich von der tragenden Struktur 12 nach unten erstrecken. Ein derartiger Mähdrescher ist in der US 6 285 198 detailliert beschrieben. Anstelle des dargestellten Axialmähdreschers kann die Erfindung auch an beliebigen anderen Typen von Mähdreschern verwendet werden, wie konventionellen Strohschüttlermaschinen. Ein Schneidwerk 16 wird verwendet, um Erntegut zu ernten und es einem Schrägförderer 18 zuzuführen. Das geerntete Gut wird durch den Schrägförderer 18 einer Leittrommel 20 zugeführt. Die Leittrommel 20 führt das Erntegut nach oben durch einen Einlassübergangsabschnitt 22 zu einer axialen Gutbearbeitungseinheit 24. Die axiale Gutbearbeitungseinheit 24 ist zwischen den Seitenwänden des Mähdreschers 10 angeordnet und wird von ihnen abgestützt.

Die axiale Gutbearbeitungseinheit 24 umfasst ein axiales Rotorgehäuse 26 und einen im Rotorgehäuse 26 angeordneten axialen Rotor 28. Das geerntete Gut tritt durch den Einlassübergangsabschnitt 22 in das Rotorgehäuse 26 ein. Der Rotor 28 ist mit einem Beschickungsabschnitt, einem Dreschabschnitt und einem Trennabschnitt ausgestattet. Das Rotorgehäuse 26 hat je einen entsprechenden Beschickungsabschnitt, Dreschabschnitt und Trennabschnitt.

Beide Gutbearbeitungsabschnitte des Rotors 28, der Dreschabschnitt und der Trennabschnitt sind mit Guteingriffszusammenbauten ausgestattet. Der Dreschabschnitt des Rotorgehäuses 26 ist mit einem Dreschkorb ausgestattet und der Trennabschnitt mit einem Rost. Aus der Gutmatte freigesetzte Körner und Spreu fallen durch den Dreschkorb und den Rost. Der Dreschkorb und der Rost verhindern den Durchtritt von Erntegut, das größer als Korn oder Kaff ist, in das Reinigungssystem 34.

Wie in der Figur 1 dargestellt, wird durch den Dreschkorb und den Rost fallendes Korn und Spreu dem Reinigungssystem 34 zugeführt, das die Spreu vom Korn trennt. Das saubere Korn wird dann durch einen Elevator 36 für sauberes Korn einem Fontänenschneckenförderer 38 zugeführt. Der Fontänenschneckenförderer 38 fördert das Korn in einen Vorratsbehälter 40 in der Art eines Korntanks. Der Elevator 36 für sauberes Korn und der Fontänenschneckenförderer 38 umfassen Mittel zum Bewegen des sauberen Korns vom Kornboden des Mähdreschers in den Vorratsbehälter 40. Das Korn wird durch einen Entladeförderer 57 in Form eines Schneckenförderers aus dem Vorratsbehälter 40 entfernt. Wenn das Stroh das Ende der Gutbearbeitungseinheit 24 erreicht hat, wird es durch einen Auslass einer Auswurftrommel 46 zugeführt. Die Auswurftrommel 46 fördert das Stroh zur Rückseite des Mähdreschers 10 hinaus. Die Bedienung des Mähdreschers 10 erfolgt von einer Bedienerkabine 48 aus.

Wenn der Vorratsbehälter 40 zu entleeren ist, führen quer angeordnete Entladeförderer 56 und 58 in Form von Schneckenförderern das Korn an die Seite des Vorratsbehälters 40, wo es mit dem Entladeförderer 57 in Berührung kommt, der das saubere Korn durch ein vertikales Entladerohr 61 und ein horizontales Entladerohr 59 leitet. Der Entladeförderer 57 umfasst einen vertikalen Abschnitt 57a, der sich zumindest teilweise innerhalb des Entladerohrs 61 befindet, ein rechtwinkliges Getriebe 57b, und einen horizontalen Abschnitt 57c innerhalb des Entladerohrs 59. Während einer Entladeoperation würde sich das Entladerohr 59 normalerweise von der Seite des Mähdreschers 10 nach außen erstrecken, so dass sauberes Korn einfacher in einen Wagen oder Anhänger geleitet werden kann.

Der Vorratsbehälter 40 umfasst einen Trog 60, der einen größeren Trogbereich 70 und einen kleineren Trogbereich 72 umfasst, welche die horizontalen Entladeförderer 56 bzw. 58 aufnehmen. Der Trog 60 ist zu einem Ladegehäuse oder Sumpf 64 hin offen. Der vertikale Abschnitt 57a des Entladeförderers 57 erstreckt sich durch das vertikale Rohr 61 und in den Sumpf 64. Das durch die horizontalen Entladeförderer 56 und 58 horizontal durch den Trog 60 geförderte Korn wird in den Sumpf 64 abgegeben und mittels des vertikalen Abschnitts 57a durch das Rohr 61 und mittels des horizontalen Abschnitts 57 c durch das Entladerohr 59 entfernt.

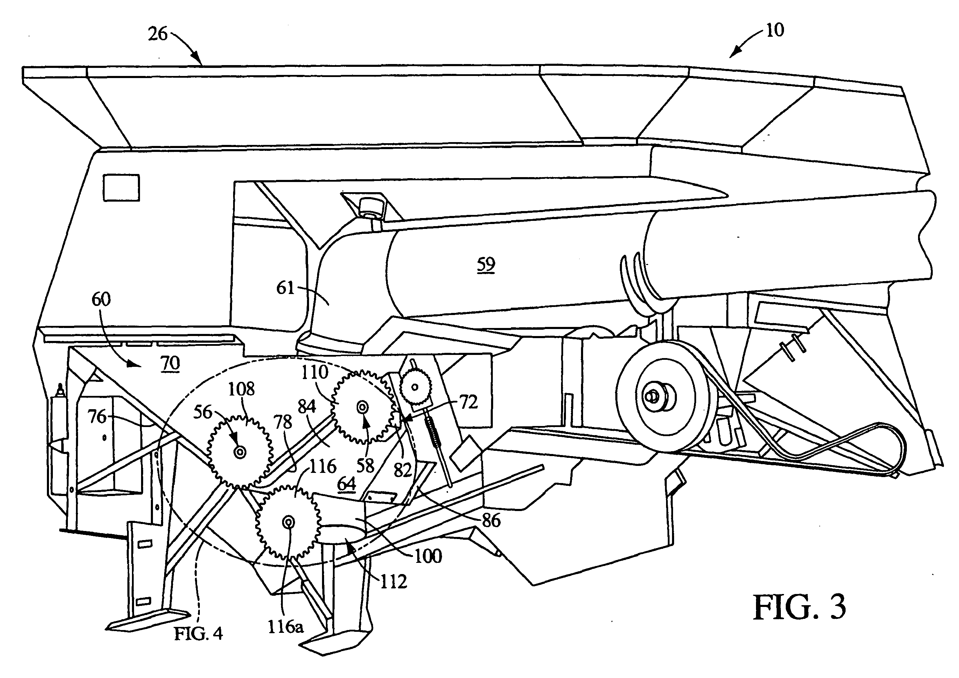

Wie in der Figur 3 illustriert, umfasst der größere Trogbereich 70 eine vordere geneigte Wand 76 und eine hintere geneigte Wand 78. Der kleinere Trogbereich 72 umfasst eine hintere geneigte Wand 82, die mit einer Krümmung in die hintere geneigte Wand 78 des größeren Trogbereichs 70 übergeht. Der Sumpf 64 umfasst Seitenwände 84, 86, die sich im Wesentlichen parallel zueinander und vertikal erstrecken und im Wesentlichen durchgehend an den geneigten Wänden 78, 82 befestigt sind. Die Seitenwand 86 ist in den Figuren nicht vollständig sichtbar. Die Seitenwand 86 hat im Wesentlichen dieselbe Form wie die linke Seitenwand 84.

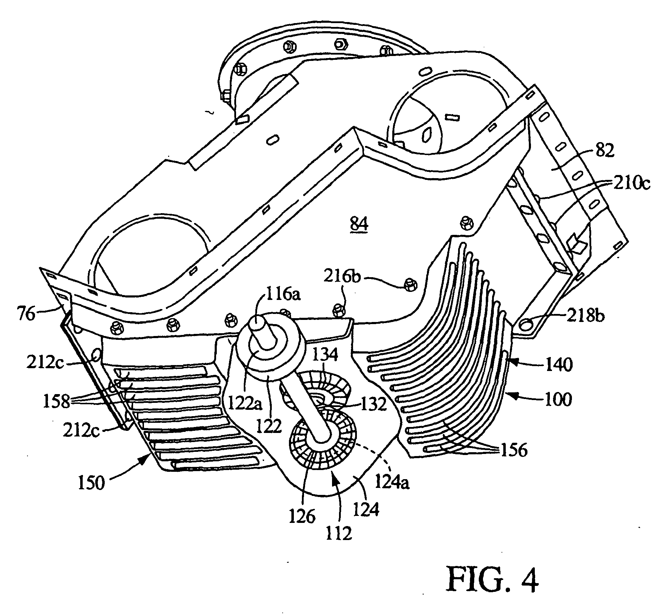

Wie in der Figur 4 dargestellt, ist ein gegossenes Element 100 an den Wänden 76, 82, 84, 86 befestigt. Die Seitenwände 84, 86 und das Element 100 bilden einen im Wesentlichen umschlossenen Sumpf 64, der an dem Trog 60 befestigt ist, mit Ausnahme weiter unten beschriebener Ablauf- und Reinigungsöffnungen. Wenn Abdeckplatten an dem Element 100 installiert sind, bildet der Sumpf 64 mit den Trogbereichen 70, 72 eine im Wesentlichen abgeschlossene Einheit.

Die Entladeförderer 56, 58 werden durch Ritzel 108, 110 angetrieben (Figur 3). Der Entladeförderer 57 wird durch ein rechtwinkliges Getriebe 112 angetrieben, das über eine Eingangswelle 116a durch ein Ritzel 116 angetrieben wird. Eine Kettenantriebsanordnung zum Drehen der Ritzel 108, 110, 116 wird detaillierter in der US 4 967 863 und in der US-Patentanmeldung 2002309977 beschrieben

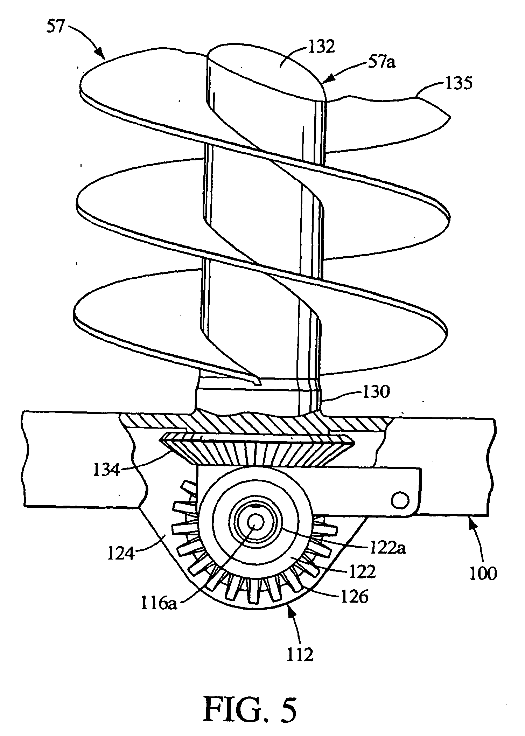

Das Element 100 umfasst Schwenklagerungen 122, 124 zur drehbaren Aufnahme eines mit horizontaler Drehachse versehenen Getriebezusammenbaus 126 für das rechtwinklige Getriebe 112. Lagerungen 122a, 124a werden innerhalb der Schwenklagerungen 122, 124 verwendet. Das Element 100 umfasst außerdem eine Schwenklagerung 130 zum Abstützen und drehbaren Halten einer vertikalen Welle 132 (Figur 5) des Schneckenförderers 57. Eine Drehung und Auflagedruck aufnehmende Anordnung (nicht gezeigt) wird innerhalb der Schwenklagerung 130 verwendet. Ein Zahnrad 134 mit vertikaler Achse ist an der Welle 132 befestigt und kämmt mit dem Zahnrad 126. Bei Drehung des Zahnrads 136 durch das Zahnrad 126 drehen sich die Welle 132 und die Windungen 135 des Schneckenförderers 57.

Ein hinterer Wandbereich 140 des Elements 100 ist an der Wand 82 und an den Seitenwänden 84, 86 befestigt. Ein vorderer Wandbereich 150 des Elements 100 ist an der Wand 76 und den Seitenwänden 84, 86 befestigt.

Die Wandbereiche 140, 150 weisen jeweils Öffnungen 156, 158 zum Ablaufenlassen und Reinigen des Sumpfs 64 auf. Die Wandbereiche 140, 150 sind vorzugsweise mit im Wesentlichen offenen Flächen mit in einem Gittermuster angeordneten Öffnungen versehen, die durch parallele, langgestreckte Öffnungen 156, 158 gebildet werden. Das Element 100 behält eine hinreichende Festigkeit, obwohl es die Vorteile eines Entwurfs mit vermindertem Gewicht und der Möglichkeit des Durchflusses hat. Eine Brücke oder ein Träger, der durch das Element 100 gebildet wird, ist hinreichend fest, um das Gewicht des Elements 100 und des Schneckenförderers 57 zu tragen. Daher konnten andere Trägerstrukturen, die normalerweise bereitgestellt werden, um Metallbleche zum Abstützen des Schneckenförderers 57 zu verstärken, in ihrer Masse vermindert oder weggelassen werden.

Während des normalen Betriebs des Mähdreschers 10 werden die Öffnungen 156, 158 durch darunterliegende Abdeckplatten (nicht gezeigt), die am Element 100 befestigt sind, geschlossen. Die Abdeckplatten werden entfernt, um den Vorratsbehälter 40 des Mähdreschers 10 zu reinigen.

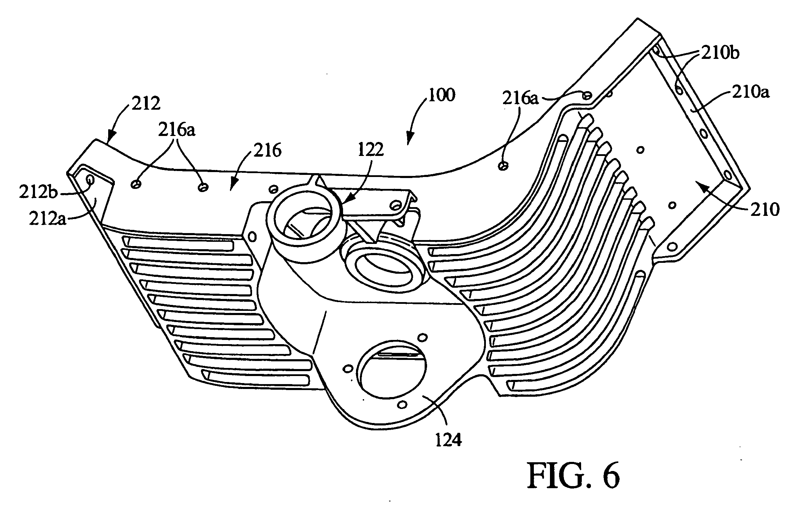

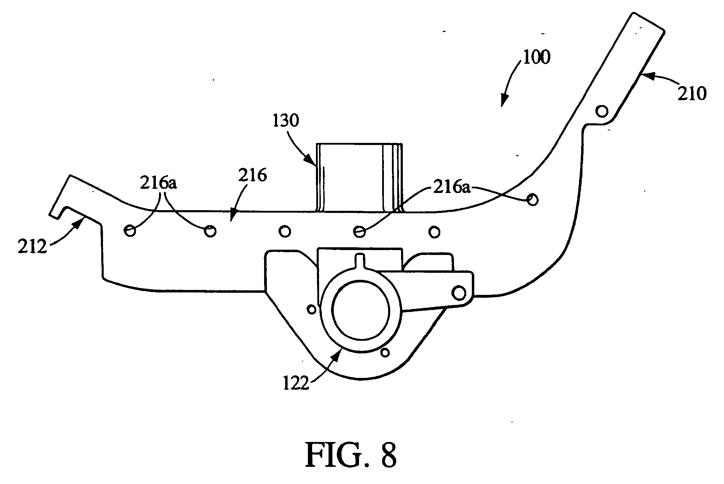

Die Figuren 6 bis 8 zeigen, dass das Element 100 Endplattenabschnitte 210, 212 aufweist, die Endflansche 210a, 212a mit Löchern 210b, 212b aufweisen, um Befestigungselemente 210c, 212c (Figur 4) aufzunehmen, um das Element 100 an den Wänden 76, 78 zu befestigen. Das Element 100 umfasst außerdem Seitenwände 216, 218 mit Seitenlöchern 216a, 218a, um Befestigungselemente 216b, 218b (Figur 4) aufzunehmen, um die Seitenwände 84, 86 des Sumpfs 64 am Element 100 zu befestigen.

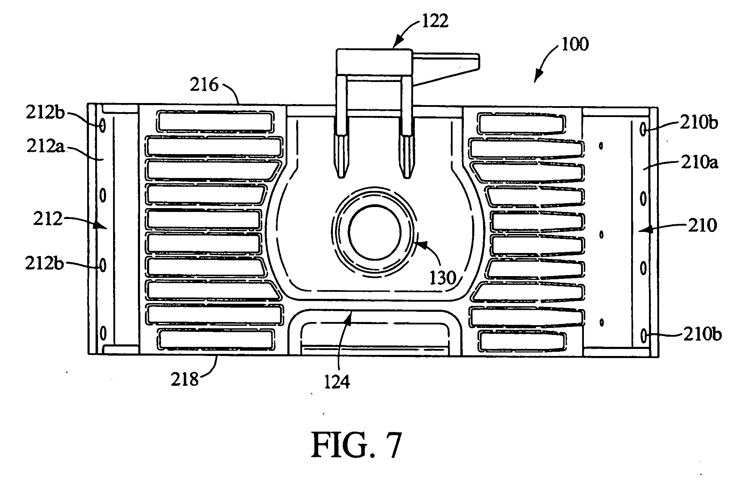

Die Löcher 210b, 212b, 216a, 218a können mit Gewinde versehen oder glattwandig sein. Schrauben und Muttern können für die glatten, durchgebohrten Löcher verwendet werden. Die in Figur 7 gezeigte Seitenwand 218 ist in Form und Lochmuster der Seitenwand 216 des Elements 100 im Wesentlichen ähnlich.

Eine Reinigung des Vorratsbehälters 40 wird vorgenommen, indem die Abdeckplatten, die die Öffnungen 156, 158 abdichten, entfernt werden. Die Reinigung wird vorgenommen durch die Verwendung komprimierter Luft, die mit hoher Geschwindigkeit entweder aus Düsen ausgestoßen wird, die sich im Vorratsbehälter 40 befinden, oder aus einer anderen Ausstoßöffnung kommt, z. B. eines manuell geführten Hochdruckreinigers, und Korn und Verunreinigungen aus den unteren Bereichen des Trogs 60 in Richtung auf den Sumpf 64 und dort hinein fördert. Aus dem Sumpf 64 können das Korn und die Verunreinigungen den Vorratsbehälter 40 verlassen, indem sie durch die Öffnungen 156, 158 fallen. Als Verbesserung können das Korn und die Verunreinigungen entsprechend der Mittel und Verfahren, die in den US-Patentanmeldungen 2002309977 und 2002309979 beschrieben werden, bewegt und entfernt werden.

Das oben beschriebene Element 100 ist vorzugsweise aus Gusseisen hergestellt, obwohl auch andere Materialien verwendet werden können.

## Patentansprüche

1. Erntemaschine, insbesondere Mähdrescher (10), mit einem Vorratsbehälter (40) für geerntetes Erntegut, der einen Trog (70) bildende Wände (76, 82, 84, 86) umfasst, wobei ein Entladeförderer (57) sich auf einem Element (100) abstützt, das am Boden des Trogs (70) angeordnet ist, **dadurch gekennzeichnet, dass** ein Wandbereich (140, 150) des Vorratsbehälters (40) in der Nähe des Elements (100) mit wenigstens einer zum Reinigen dienenden Öffnung (156, 158) versehen ist, die durch eine abnehmbare Abdeckung verschlossen oder verschließbar ist.

2. Erntemaschine nach Anspruch 1, **dadurch gekennzeichnet, dass** die Öffnung oder Öffnungen (156, 158) in einem Gittermuster angeordnet ist oder sind.

3. Erntemaschine nach Anspruch 1 oder 2, **dadurch gekennzeichnet, dass** der Wandbereich (140, 150) und/oder das Element (100) gegossen ist.

4. Erntemaschine nach einem der Ansprüche 1 bis 3, **dadurch gekennzeichnet, dass** der Wandbereich (140, 150) in dem Element (100) gebildet ist.

5. Erntemaschine nach einem der Ansprüche 1 bis 4, **dadurch gekennzeichnet, dass** der Vorratsbehälter (40) einen Sumpf (64) aufweist, der an dem Trog (70) befestigt ist und zur Aufnahme von Korn zum Trog (70) hin offen ist, und dass das Element (100) und der Wandbereich (140, 150) den Sumpf (64) bilden.

6. Erntemaschine nach einem der Ansprüche 1 bis 5, **dadurch gekennzeichnet, dass** zwei mit abdeckbaren Öffnungen (156, 158) ausgestattete Wandbereiche (140, 150) vorhanden sind, die jeweils an einer Seite des Elements (100) angeordnet sind.

7. Erntemaschine nach Anspruch 6, **dadurch gekennzeichnet, dass** die Wandbereiche (140, 150) an gegenüberliegenden Seiten des Elements (100) angeordnet sind.

8. Erntemaschine nach einem der Ansprüche 1 bis 7, **dadurch gekennzeichnet, dass** der Wandbereich (140, 150) über eine horizontale Länge des Vorratsbehälters (40) im Wesentlichen steif und selbsttragend ist.

9. Erntemaschine nach einem der Ansprüche 1 bis 8, **dadurch gekennzeichnet, dass** der Vorratsbehälter (40) einen horizontalen Schneckenförderer (56, 58) aufweist, der betreibbar ist, Korn in den Trog (70) zu fördern.

## Claims

1. Harvester, in particular combine harvester (10) having a storage container (40) for harvested crops which includes walls (76, 82, 84, 86) which form a trough (70), an unloading conveyor (57) being supported on an element (100) which is disposed on the base of the trough (70), **characterised in that** a wall region (140, 150) of the storage container (40), in the vicinity of the element (100), is provided with at least one opening (156, 158) which serves for cleaning and is closed or can be closed by means of a removable cover.

2. Harvester according to claim 1, **characterised in that** the opening or openings (156, 158) is or are disposed in a grid pattern.

3. Harvester according to claim 1 or 2, **characterised in that** the wall region (140, 150) and/or the element (100) is cast.

4. Harvester according to one of the claims 1 to 3, **characterised in that** the wall region (140, 150) is formed in the element (100).

5. Harvester according to one of the claims 1 to 4, **characterised in that** the storage container (40) has a sump (64) which is mounted on the trough (70) and is open towards the trough (70) for receiving grain, and **in that** the element (100) and the wall region (140, 150) form the sump (64).

6. Harvester according to one of the claims 1 to 5, **characterised in that** two wall regions (140, 150) which are equipped with openings (156, 158) which can be covered are present, said wall regions being disposed respectively on one side of the element (100).

7. Harvester according to claim 6, **characterised in that** the wall regions (140, 150) are disposed on oppositely situated sides of the element (100).

8. Harvester according to one of the claims 1 to 7, **characterised in that** the wall region (140, 150) is substantially rigid and self-supporting over a horizontal length of the storage container (40).

9. Harvester according to one of the claims 1 to 8, **characterised in that** the storage container (40) has a horizontal auger (56, 58) which can be operated to convey grain into the trough (70).

## Revendications

1. Machine de récolte, en particulier moissonneuse-batteuse (10), comportant un réservoir (40) pour les produits récoltés, lequel comporte des parois (76, 82, 84, 86) formant une cuve (70), un convoyeur de déchargement (57) prenant appui sur un élément (100) qui est agencé sur le fond de la cuve (70), **caractérisée en ce qu'**une zone de paroi (140, 150) du réservoir (40) est munie, à proximité de l'élément (100), d'au moins une ouverture (156, 158) destinée au nettoyage, qui est fermée ou peut être fermée par un cache amovible.

2. Machine de récolte selon la revendication 1, **caractérisée en ce que** l'ouverture ou les ouvertures (156, 158) est ou sont agencée(s) en forme de grille.

3. Machine de récolte selon la revendication 1 ou 2, **caractérisée en ce que** la zone de paroi (140, 150) et/ou l'élément (100) sont des pièces moulées.

4. Machine de récolte selon l'une quelconque des revendications 1 à 3, **caractérisée en ce que** la zone de paroi (140, 150) est formée dans l'élément (100).

5. Machine de récolte selon l'une quelconque des revendications 1 à 4, **caractérisée en ce que** le réservoir (40) comporte un fond (64) qui est fixé contre la cuve (70) et qui est ouvert vers la cuve (70) pour la réception des grains, et **en ce que** l'élément (100) et la zone de paroi (140, 150) forment le fond (64).

6. Machine de récolte selon l'une quelconque des revendications 1 à 5, **caractérisée en ce qu'**il est prévu deux zones de paroi (140, 150), qui sont munies d'ouvertures (156, 158), pouvant être fermées, et qui sont agencées chacune sur un côté de l'élément (100).

7. Machine de récolte selon la revendication 6, **caractérisée en ce que** les zones de paroi (140, 150) sont agencées sur des côtés opposés de l'élément (100).

8. Machine de récolte selon l'une quelconque des revendications 1 à 7, **caractérisée en ce que** la zone de paroi (140, 150) est sensiblement rigide et autoporteuse sur une longueur horizontale du réservoir (40).

9. Machine de récolte selon l'une quelconque des revendications 1 à 8, **caractérisée en ce que** le réservoir (40) comporte une vis de transport (56, 58) horizontale qui peut être utilisée pour transporter les grains dans la cuve (70).
